# EUROPEAN PATENT SPECIFICATION

(11) **EP 0 989 036 B1**
(45) Date of publication and mention of the grant of the patent: **11.12.2002**
(21) Application number: 99203069.2
(22) Date of filing: 21.09.1999
(51) Int. Cl.: B60R 25/00

(54) **Wheel Clamp**
Klammer zum Blockieren eines Rades
Dispositif de blocage de roue

(30) Priority: 23.09.1998 NL 1010173
(43) Date of publication of application: 29.03.2000
(73) Proprietor: Westera, Lex Elzo, 9343 TB Een West (NL); Dondorff, Willem Lodewijk, 9411 BP Beilen (NL)
(72) Inventor: Westera, Lex Elzo, 9343 TB Een West (NL); Dondorff, Willem Lodewijk, 9411 BP Beilen (NL)

(56) References cited:
- GB-A- 2 285 422
- NL-C- 1 003 253
- US-A- 5 176 013

## Description

The invention relates to a wheel clamp for blocking a wheel provided with a wheel rim and attached with wheel nuts, which wheel clamp is provided with a cover plate, for at least substantially covering the wheel nuts, a clamping device attached to the cover plate and provided with two hook-shaped pins for clamping the cover plate into two holes available in the wheel rim and an arm, connected to a surface of the cover plate, for blocking the wheel.

A wheel clamp of this type, having the features of the preamble of claim 1, is known in the art from NL-C-1 003 253. The known type is provided with a screwed spindle by which the hook-shaped pins can be moved towards one another for opening the wheel clamp or moved apart for closing the wheel clamp. For operating the screwed spindle a spanner must be used, for example the spanner for releasing the wheel nuts. The known wheel clamp performs satisfactorily, but placing and removing it is a cumbersome as well as a time-consuming operation because the spindle must be rotated a number of times with the spanner.

The wheel clamp according to an aspect of the invention is characterized in that first spring means are provided for pushing together the two hook-shaped pins if the wheel clamp is in a closed position, and a lever, for bringing the wheel clamp into a closed position and locking means, for locking the lever.

According to a further aspect of the invention second spring means are provided for pushing apart the two hook-shaped pins if the wheel clamp is in an open position, which provides for an automatic disengagement.

According to a further aspect of the invention, the arm is of a substantially tubular form, and one hook-shaped pin is connected to a core, slidably mounted into the tubular formed arm.

According to a further aspect of the invention, the arm is provided with a rigidly mounted hook-shaped pin, the second spring means, the slidably mounted core, the first spring means and pressing means for pressing the slidably mounted core.

According to a further aspect of the invention one end of the arm is provided with a hinged connection to an at least substantially U-shaped profile which at least substantially encloses the tubular arm when the wheel clamp is in the closed position. The U-shaped profile, which may act as a lever, has as an additional advantage that it protects and hides the tubular arm and that the strength of the arm is greatly increased.

According to another aspect of the invention, the force exerted on the U-shaped profile is amplified and transferred to the first spring means. For that purpose connecting means are provided near the hinge means and between the U-shaped profile and the first spring means, such that the pressing means are realized by the connecting means and the U-shaped profile as a lever.

According to another aspect of the invention, the locking means are arranged for fixing the U-shaped profile around the tubular arm if the wheel clamp is in the closed position. In a favourable embodiment, the locking means are arranged for acting on the rigidly mounted hook-shaped pin, which extends through and protrudes from an end of the U-shaped profile. For the locking means, a padlock can be chosen. Preferably, the U-shaped profile is then provided with two projections for substantially covering a U-shaped part of the padlock.

The invention will now be further explained with reference to the following figures, in which:
- Fig. 1: represents a wheel clamp in an operational situation;
- Fig. 2A: represents a closed wheel clamp in front view;
- Fig. 2B: represents a cross section of the tube-shaped arm;
- Fig. 3: represents an open wheel clamp in side view.

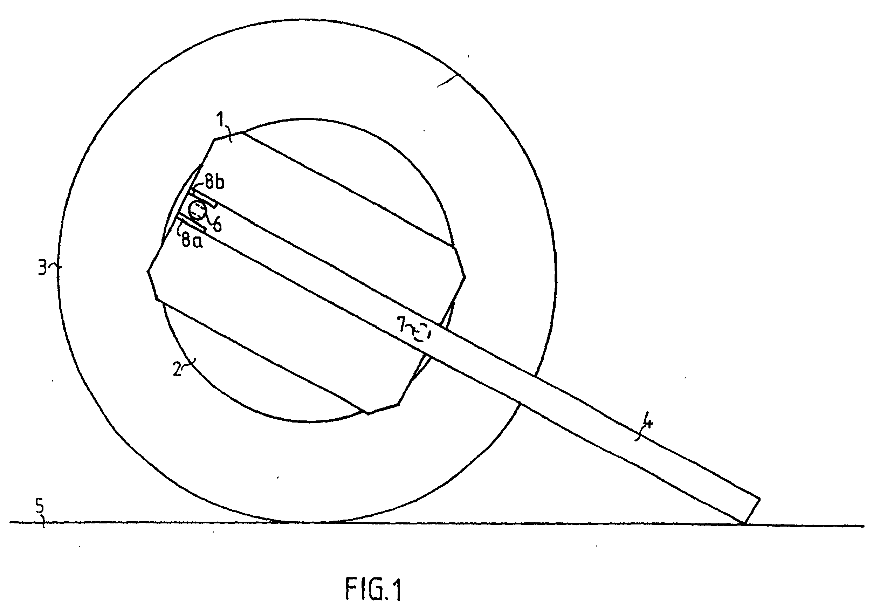

Fig. 1 represents a wheel clamp according to the invention in an operational situation comprising a cover plate 1, connected to a wheel rim 2 of a wheel 3. The wheel is blocked with the aid of a compound arm 4, connected to cover plate 1, which arm 4 unavoidably contacts the ground 5 when wheel 3 is rotated. The actual connection of cover plate 1 to wheel 3 is made by two hook-shaped pins 6,7 that are clamped in two holes in wheel rim 2. Hook-shaped pin 6 extends through and protrudes from compound arm 4, and is provided with a hole through which a padlock can be passed, for locking the wheel clamp. In order to prevent the U-shaped part of the padlock from being cut-through, compound arm 4 is provided with two projections, 8a, 8b which cover the U-shaped part almost completely.

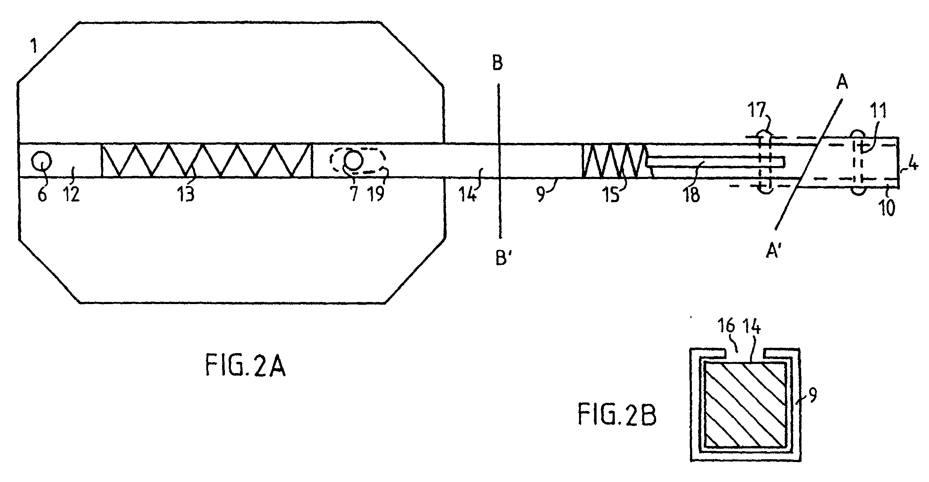

Fig. 2A represents a closed wheel clamp in front view, with a cover plate 1 and a compound arm 4. Compound arm 4 consists of a tubular arm 9 and a U-shaped profile 10, dimensioned such that U-shaped profile 10 completely encloses and protects tubular arm 9 if the wheel clamp is closed, while it can swing forward around an axis 11, out of the plane of the drawing, when the wheel clamp is open. For clarity, U-shaped profile 10 is only shown up to line AA' and with a dotted line continuing somewhat further. In tubular arm 9 are successively placed a rigidly mounted core 12, in which hook-shaped pin 6 is anchored, a relatively long, weak spring 13, a slidable core 14, in which hook-shaped pin 7 is anchored, and a relatively short, stiff spring 15. Fig. 2B represents a cross section of the tubular arm 9 along the line BB', in which slidable core 14 is visible and from which it follows that tubular arm 9 is on the upper side provided with a groove 16, running in a longitudinal direction.

U-shaped profile 10 is provided with a second axis 17, connected to U-shaped profile 10, but not to tubular arm 9. For that purpose, tubular arm 9 is provided with a groove, not shown in the figure, for passing second axis 17 when the wheel clamp is closed. Fixed to second axis 17 are connecting means 18, which can contact stiff spring 15 via groove 16. While closing the wheel clamp, stiff spring 15 is compressed by connecting means 18 with U-shaped profile 10 acting as a lever. Stiff spring 15 pushes slidable core 14 against the pressure of weak spring 13 towards rigidly mounted core 12, causing the hook-shaped pins 6,7 to clamp to wheel rim 2 under operational conditions. Weak spring 13 provides for an easy detachment of hook-shaped pins 6,7 when the wheel clamp is opened.

In order to enable hook-shaped pin 7 to move, tubular arm 9 and cover plate 1 are provided with a slotted hole 19. Hook-shaped pin 6 extends through and protrudes from cover plate 1 in order to contact wheel rim 2. Moreover, hock-shaped pin 6 extends through tubular arm 9 and, with the wheel clamp closed, through the U-shaped profile. The end protruding from the U-shaped profile is provided with a hole, through which a padlock can be passed, which locks the wheel clamp. The length of slotted hole 19 substantially determines which distance between two holes in the wheel rim is required for the wheel clamp in order to fit. In that respect it can be noted that it is not strictly necessary to use two holes that are placed diagonally in the rim. In fact, two arbitrarily selected holes in the wheel rim will do, insofar as hook-shaped pins 6,7 can be fitted into them.

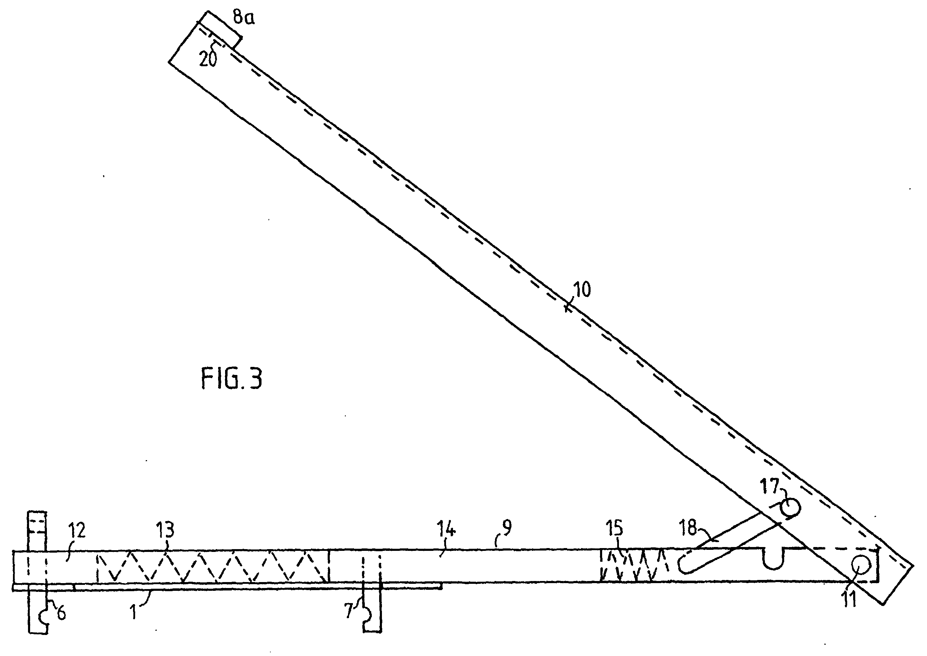

Fig. 3 represents an open wheel clamp in side view, with cover plate 1, U-shaped profile 10, tubular arm 9, hook-shaped pin 6 anchored in rigidly mounted core 12, hook-shaped pin 7 anchored in slidable core 14, relatively weak spring 13, relatively stiff spring 15 and connecting means 18. Immediately obvious is how U-shaped profile 10 can be used as a lever for compressing relatively stiff spring 15 via connecting means 18 in order to close the wheel clamp. Moreover, it can be seen how hook-shaped pin 6 protrudes towards U-shaped profile 10, which U-shaped profile 10 is provided with a hole 20 in order to let pass hook-shaped pin 6.

In the wheel clamp according to the invention, U-shaped profile 10 has three functions. With the wheel clamp in an open position it serves as a lever, enabling an easy closing of the wheel clamp against the pressure of stiff spring 15. With the wheel clamp in a closed position it makes the contents of tubular arm 9 substantially inaccessible, such that it is virtually impossible to move slidable core 14 in an improper manner. Moreover, it adds substantially to the strength of compound arm 4, which forms the actual blocking means.

## Claims

1. Wheel clamp for blocking a wheel (3) provided with a wheel rim (2) and attached with wheel nuts, which wheel clamp is provided with a cover plate (1), for at least substantially covering the wheel nuts, a clamping device attached to the cover plate (1) and provided with two hook-shaped pins (6, 7) for clamping the cover plate (1) into two holes available in the wheel rim (2) and an arm (4), connected to a surface of the cover plate (1), for blocking the wheel (3), **characterized in that** first spring means (15) are provided for forcing together the two hook-shaped pins (6, 7) if the wheel clamp is in a closed position, and a lever (10), for bringing the wheel clamp into a closed position and locking means, for locking the lever (10).

2. Wheel clamp according to claim 1, **characterized in that** second spring means (13) are provided for pushing apart the two hook-shaped pins (6, 7) if the wheel clamp is in an open position.

3. Wheel clamp according to claim 2, **characterized in that** the arm (4) is of a substantially tubular form (9), and that one hook-shaped pin (7) is connected to a core (14), slidably mounted into the tubular arm (9).

4. Wheel clamp according to claim 3, **characterized in that** the arm (4) is provided with a rigidly mounted hook-shaped pin (6), the second spring means (13), the slidably mounted core (14), the first spring means (15), and pressing means (10, 18) for pressing the slidably mounted core (14).

5. Wheel clamp according to claim 4, **characterized in that** one end of the arm (4) is provided with a hinged connection (11) to an at least substantially U-shaped profile (10) which at least substantially encloses the tubular arm (9) when the wheel clamp is in the closed position.

6. Wheel clamp according to claim 5, **characterized in that** connecting means (18) are provided near the hinged connection (11) for connecting the U-shaped profile (10) and the first spring means (15).

7. Wheel clamp according to claim 6, **characterized in that** the pressing means (10, 18) comprise the connecting means (18) and the U-shaped profile (10) as the lever.

8. Wheel clamp according to claim 5, **characterized in that** the locking means are arranged for fixing the U-shaped profile (10) round the tubular arm (9) when the wheel clamp is in the closed position.

9. Wheel clamp according to claim 8, **characterized in that** the locking means are arranged for acting on the rigidly mounted hook-shaped pin (6), which extends through and protrudes from an end of the U-shaped profile (10).

10. Wheel clamp according to claim 9, **characterized in that** the locking means comprise a padlock and that the U-shaped profile (10) is provided with two projections (8a, 8b) for at least substantially covering an U-shaped part of the padlock.

## Patentansprüche

1. Radklemme für das Blockieren eines mit einer Felge (2) versehenen und mit Radmuttern befestigten Rades (3), welche Radklemme mit einer Abdeckplatte (1) für das zumindest im wesentlichen Abdecken der Radmuttern, mit einer an der Abdeckplatte (1) befestigten Klemmvorrichtung, und mit zwei hakenförmigen Stiften (6,7) für das Festklemmen der Abdeckplatte (1) in zwei in der Felge (2) vorhandenen Löchern sowie mit einem an der Abdeckplatte (1) befestigten Arm (4) für das Blockieren des Rades versehen ist, **dadurch gekennzeichnet, dass** erste Federungsmittel (15) vorgesehen sind für das Zusammendrücken der zwei hakenförmigen Stifte (6,7), wenn sich die Radklemme in geschlossenem Zustand befindet, und ein Hebel (10), für das in einen geschlossenen Zustand Versetzen der Radklemme sowie Schließmittel für das Arretieren des Hebels (10).

2. Radklemme gemäß Anspruch 1, **dadurch gekennzeichnet, dass** zweite Federungsmittel (13) für das Auseinanderdrücken der hakenförmigen Stifte (6,7) vorgesehen sind, wenn sich die Radklemme in geöffnetem Zustand befindet.

3. Radklemme gemäß Anspruch 2, **dadurch gekennzeichnet, dass** der Arm (4) zumindest im wesentlichen rohrförmig ist (9, und dass der eine hakenförmige Stift (7) mit einem innerhalb des rohrförmigen Armes (9) verschiebbaren Kern (14) verbunden ist.

4. Radklemme gemäß Anspruch 3, **dadurch gekennzeichnet, dass** der Arm (4) mit einem festangeordneten hakenförmigen Stift (6), den zweiten Federungsmitteln (13), dem verschiebbaren Kern (14), ersten Federungsmitteln (15) sowie mit Andrückmitteln (10,18) für das Andrücken des verschiebbaren Kerns (14) versehen ist.

5. Radklemme gemäß Anspruch 4, **dadurch gekennzeichnet, dass** der Arm (4) an einem Ende über Scharniermittel (11) mit einem zumindest im wesentlichen U-förmigen Profil (10) verbunden ist, welches Profil den rohrförmigen Arm (9) zumindest im wesentlichen umschließt, wenn sich die Radklemme in geschlossenem Zustand befindet.

6. Radklemme gemäß Anspruch 5, **dadurch gekennzeichnet, dass** nahe der Scharniermittel (11) Verbindungsmittel (18) vorgesehen sind, für die Verbindung des U-förmigen Profils (10) mit den ersten Federungsmitteln (15).

7. Radklemme gemäß Anspruch 6, **dadurch gekennzeichnet, dass** die Andrückmittel (10,18) die Verbindungsmittel (18) und das U-förmige Profil (10) als Hebel umfassen.

8. Radklemme gemäß Anspruch 5, **dadurch gekennzeichnet, dass** die Schließmittel für das Fixieren des U-förmigen Profils (10) rund um den rohrförmigen Arm (9) eingerichtet sind, wenn sich die Radklemme in geschlossenem Zustand befindet.

9. Radklemme gemäß Anspruch 8, **dadurch gekennzeichnet, dass** die Schließmittel für das Einwirken auf das durch das U-förmige Profil (10) herausragende Ende des festangeordneten, hakenförmigen Stiftes (6) eingerichtet sind.

10. Radklemme gemäß Anspruch 9, **dadurch gekennzeichnet, dass** die Schließmittel ein Hängeschloss umfassen, und dass das U-förmige Profil (10) mit zwei Ansätzen (8a,8b) für das zumindest im wesentlichen Abdecken eines U-förmigen Teiles des Hängeschlosses versehen ist.

## Revendications

1. Sabot de Denver pour bloquer une roue (3) prévue d'une jante (2) et attachée avec des boulons de fixation, quel sabot est prévu d'un panneau de recouvrement (1), pour au moins sensiblement couvrir les boulons de fixation, une dispositif de serrage attachée au panneau de recouvrement (1) et prévue de deux broches en forme de croc (6,7) pour serrer le panneau de recouvrement (1) dans deux trous présent dans la jante (2) et d'un bras (4), monté à une surface du panneau de recouvrement (1), pour bloquer la roue (3), **caractérisé en ce qu'**un premier dispositif de ressort (15) est prévu pour pousser les deux broches en form de croc (6,7) l'un vers l'autre si le sabot de Denver est dans une position fermée, et un levier (10), pour forcer le dispositif de Denver dans une position fermée, et une serrure pour fixer le levier (10).

2. Sabot de Denver tel que revendiqué à la revendication 1, **caractérisé en ce qu'**un deuxième dispositif de ressort (13) est prévu pour séparer les deux broches en form de croc (6,7) si le sabot de Denver est dans une position ouverte.

3. Sabot de Denver tel que revendiqué à la revendication 2, **caractérisé en ce que** le bras (4) est au moins sensiblement d'une forme tubulaire (9), et qu'une broche en forme de croc (7) est attachée à un noyau (14), monté déplaçable dans le bras tubulaire (9).

4. Sabot de Denver tel que revendiqué à la revendication 3, **caractérisé en ce que** le bras (4) est prévu d'une broche en forme de croc (6) montée rigide, le deuxième dispositif de ressort (13), le noyau (14) monté déplaçable, le premier dispositif de ressort (15) et un dispositif de pressage (10,18) pour presser sur le noyau (14) déplaçable.

5. Sabot de Denver tel que revendiqué à la revendication 4, **caractérisé en ce qu'**une extrémité du bras (4) est prévu d'une articulation (11) avec une section profilée (10) au moins sensiblement en forme d'un U, au moins sensiblement embrassant le bras tubulaire (9) si le sabot de Denver est dans une position fermée.

6. Sabot de Denver tel que revendiqué à la revendication 5, **caractérisé en ce qu'**un dispositif de raccordement (18) est prévu près de l'articulation (11), pour raccorder la section profilée (10) en forme d'un U et le premier dispositif de ressort (15).

7. Sabot de Denver tel que revendiqué à la revendication 6, **caractérisé en ce que** le dispositif de pressage (10,18) comprend le dispositif de raccordement (18) et la section profilée (10) en forme d'un U comme un levier.

8. Sabot de Denver tel que revendiqué à la revendication 5, **caractérisé en ce que** la serrure est arrangée pour fixer la section profilée (10) en forme d'un U autour le bras tubulaire (9) si le sabot de Denver est dans une position fermée

9. Sabot de Denver tel que revendiqué à la revendication 8, **caractérisé en ce que** la serrure est arrangée pour collaborer avec la broche en forme de croc (6) montée rigide, dépassant et s'avançant d'une extrémité de la section profilée (10) en forme d'un U.

10. Sabot de Denver tel que revendiqué à la revendication 9, **caractérisé en ce que** la serrure comprends un cadenas et que la section profilée (10) en forme d'un U est prévue de deux saillies (8a,8b) pour au moins sensiblement couvrir une partie en forme d'un U du cadenas.
